# EUROPÄISCHE PATENTANMELDUNG

(11) **EP 0 870 640 A2**
(43) Veröffentlichungstag der Anmeldung: **14.10.1998**
(21) Anmeldenummer: 98106527.9
(22) Anmeldetag: 09.04.1998
(51) Int. Cl.: B60K 15/04, B60K 15/035

(54) **Kraftstoffbehälter**

(30) Priorität: 10.04.1997 DE 19714813
(71) Anmelder: Firma Carl Freudenberg, 69469 Weinheim (DE); Kautex Textron GmbH & Co. KG., 53229 Bonn (DE)
(72) Erfinder: Hör, Hartmut, 68305 Mannheim (DE); Heinemann, Joachim, 69517 Groxheimertal (DE); Kriebel, Jürgen, 53639 Ittenbach (DE); Wagner, Axel, 53225 Bonn (DE)

(57) **Zusammenfassung**

Kraftstoffbehälter (1) mit einem durch eine Befüllklappe (2) verschließbaren Einfüllstutzen (3), wobei die im Freiraum (4) des Kraftstoffbehälters (1) befindlichen flüchtigen Kraftstoffbestandteile (5) in eine mit einem Absorptionselement (6) gefüllte Speicherkammer (7) einspeisbar sind, umfassend eine den Freiraum (4) mit der Speicherkammer (7) verbindende Entlüftungsleitung (8), die durch ein Ventil (9) verschließbar ist. Der Einfüllstutzen (3) weist auf der dem Kraftstoffbehälter (1) abgewandten Seite einen Verschlußstutzen (10) mit einem Ventilträger (11) auf. Das Ventil (9) umfaßt eine Verschlußklappe (12), wobei die Verschluß- (12) und die Befüllklappe (2) Bestandteile des Ventilträgers (11) bilden, jeweils um eine Achse (13, 14) schwenkbar und federkraftbeaufschlagt an jeweils einem Ventilsitz (15, 16) im Ventilträger (11) anlegbar sind. Die Verschluß- (12) und die Befüllklappe (2) sind durch eine Mitnehmervorrichtung (17) mechanisch gekoppelt und durch Einführen einer Zapfpistole (18) durch die Befüllklappe (2) in den Einfüllstutzen (3) gemeinsam in Offenstellung bringbar.

## Beschreibung

### Technisches Gebiet

Die Erfindung betrifft einen Kraftstoffbehälter mit einem durch eine Befüllklappe verschließbaren Einfüllstutzen, wobei die im Freiraum des Kraftstoffbehälters befindlichen, flüchtigen Kraftstoffbestandteile in eine mit einem Absorptionselement gefüllte Speicherkammer einspeisbar sind, umfassend eine den Freiraum mit der Speicherkammer verbindende Entlüftungsleitung, die durch eine Ventil verschließbar ist.

### Stand der Technik

Ein derartiger Kraftstoffbehälter ist aus der EP 0 320 643 A2 bekannt. Der Kraftstoffbehälter ist mit einer in dessen Einfüllstutzen angeordneten Fangvorrichtung zum Auffangen von Kraftstoffdämpfen beim Betanken versehen. Die Befüllklappe wird in Offenstellung überführt, sobald das Füllrohr einer Zapfpistole in den Einfüllstutzen eingeführt wird. Die Befüllklappe bildet bei dem vorbekannten Kraftstoffbehälter zugleich den Ventilkörper des Ventils, das zwischen dem Kraftstoffbehälter und einem Aktivkohlefilter zum Verschließen der Entlüftungsleitung angeordnet ist.

### Darstellung der Erfindung

Der Erfindung liegt die Aufgabe zugrunde, einen Kraftstoffbehälter der eingangs genannten Art derart weiterzuentwickeln, daß das Öffnungsverhalten des Ventils in Abhängigkeit vom Öffnungsverhalten der Befüllklappe besser an die jeweiligen Gegebenheiten des Anwendungsfalls angepaßt werden kann.

Diese Aufgabe wird durch die Merkmale von Anspruch 1 gelöst. Auf vorteilhafte Ausgestaltungen nehmen die Unteransprüche Bezug.

Im Rahmen der vorliegenden Erfindung ist es vorgesehen, daß der Einfüllstutzen auf der dem Kraftstoffbehälter abgewandten Seite einen Verschlußstutzen mit einem Ventilträger aufweist, daß das Ventil eine Verschlußklappe umfaßt, daß die Verschluß- und die Befüllklappe Bestandteile des Ventilträgers bilden, jeweils um eine Achse schwenkbar und federkraftbeaufschlagt an jeweils einen Ventilsitz im Ventilträger anlegbar sind und daß die Verschluß- und die Befüllklappe durch eine Mitnehmervorrichtung mechanisch gekoppelt und durch Einführen einer Zapfpistole durch die Befüllklappe in den Einfüllstutzen gemeinsam in Offenstellung bringbar sind. Der erfindungsgemäße Kraftstoffbehälter ist vorgesehen, um Verdunstungsemissionen an die Umgebung bei dessen Betankung möglichst weitgehend zu verringern. Dazu werden die bei der Betankung entstehenden, flüchtigen Kraftstoffbestandteile durch das Ventil und die daran anschließende Entlüftungsleitung in die mit dem Absorptionselement gefüllte Speicherkammer eingespeist. Bei dem Absorptionselement kann es sich beispielweise um einen Aktivkohlefilter handeln. Die in der Spicherkammer gespeicherten, flüchtigen Kraftstoffbestandteile werden der angeschlossenen Verbrennungskraftmaschine während ihres Betriebs in Abhängigkeit vom jeweiligen Lastzustand zugeführt; die Spicherkammer wird dadurch regeneriert. Beim Einführen einer Zapfpistole durch die Befüllklappe in den Einfüllstutzen wird die Befüllklappe mechanisch gegen die Federkraft in Offenstellung gebracht. Die Mitnehmervorrichtung bewirkt, daß durch Öffnung der Befüllklappe auch die Verschlußklappe von ihrem Ventilsitz abgehoben und in Offenstellung gebracht wird. Die Ausgestaltung der Mitnehmervorrichtung ist für das Öffnungsverhalten der Verschlußklappe in Abhängigkeit vom Öffnen der Befüllklappe maßgebend.

Der Ventilsitz der Verschlußklappe ist als Dichtsitz ausgebildet, wobei die Verschlußklappe auf der dem Dichtsitz zugewandten Seite einen Dichtring aus elastomerem Werkstoff aufweist und dichtend an den Dichtsitz anlegbar ist. Die dichtschließende Ventilklappe verhindert, daß beim Fahrzeugüberschlag Kraftstoff zum Aktivkohlefilter gelangt. Flüchtige Bestandteile können während des Betriebs aus dem Tank über die Ventilklappe entweichen. Bei dem erfindungsgemäßen Kraftstoffbehälter ist nur der Ventilsitz der Verschlußklappe als Dichtsitz ausgebildet, während die Befüllklappe an ihrem Ventilsitz bewußt nicht dichtschließend anliegt. Durch die nicht dichtschließende Befüllklappe besteht einerseits die Möglichkeit, ein Abfließen von Rest-Kraftstoff aus der Betankung zurück in den Kraftstoffbehälter zu ermöglichen und andererseits die im Tankdeckel befindlichen Über/Unterdrucksicherheitsventile in ihrer Funktion nicht zu beeinträchtigen.

Die Verschlußklappe muß außerhalb des Betankungsvorgangs geschlossen sein, um zu verhindern, daß flüssiger Kraftstoff sowohl während des Fahrbetriebs als auch im Fall eines Fahrzeugüberschlags durch das Ventil und die Entlüftungsleitung in die mit einer Belüftungsleitung versehene Speicherkammer und somit in die Umgebung gelangt. Die Belüftungsleitung der Speicherkammer ist zur Regeneration des Absorptionselements erforderlich. Dazu wird Frischluft durch das Absorptionselement gesaugt, die die flüchtigen Kraftstoffbestandteile in Richtung der Verbrennungskraftmaschine mitnimmt. Der Dichtring der Verschlußklappe besteht aus einem gegen das abzudichtende Medium resistenten Werkstoff.

Gemäß einer vorteilhaften Ausgestaltung ist es vorgesehen, daß der Dichtring eine sich konisch in Richtung des Dichtsitzes verjüngende Dichtfläche aufweist und auf einen einstückig mit der Verschlußklappe ausgebildeten Haltevorsprung aufschnappbar ist. Durch die konische Ausgestaltung des Dichtrings ist dieser - bezogen auf den Dichtsitz - selbstzentrierend. Eine sichere Abdichtung der Verschlußklappe gegenüber dem Dichtsitz ist dadurch während der gesamten Gebrauchsdauer des Kraftstoffbehälters bedingt.

Die Mitnehmervorrichtung ist bevorzugt durch ein Kurvengetriebe gebildet, wobei die Verschlußklappe bei Öffnung der Befüllklappe zwangsweise in Offenstellung bringbar ist. Dazu ist die Befüllklappe nach einer vorteilhaften Ausgestaltung mit einem Führungsnocken versehen, der in einer Führungskulisse der Verschlußklappe verschiebbar gelagert ist. Die Verschlußklappe ist relativ verzögert zur Befüllklappe in Offenstellung bringbar. Eine Besonderheit des erfindungsgemäßen Kraftstoffbehälters ist darin zu sehen, daß die Befüllklappe und die Verschlußklappe nicht ein- sondern zweistückig ausgebildet und über die Mitnehmervorrichtung gekoppelt betätigbar sind. Beide Klappen haben eine eigene Achse sowie eine eigene Feder, die die jeweilige Klappe beim Entfernen der Zapfpistole aus dem Einfüllstutzen in Geschlossenstellung bringen. Das Kurvengetriebe ist derart ausgelegt, daß beim Einführen der Zapfpistole in den Einfüllstutzen zunächst nur die Befüllklappe von ihrem Ventilsitz abgehoben wird. Für den Fall, daß bereits betankt wird, obwohl die Befüllklappe noch nicht vollständig geöffnet ist, kann durch die verzögerte Öffnung kein Kraftstoff in die Leitung zur Speicherkammer gelangen. Weiterhin ist von Vorteil, daß sich die Verschlußklappe auf ihrem Ventilsitz zentrieren kann, bevor die Befüllklappe auf ihrem Sitz anschlägt. Die Verschlußklappe ist zu dieser Zeit noch in Geschlossenstellung. Nach Überwindung eines Leerwegs wird auch die Verschlußklappe von ihrem Dichtsitz abgehoben.

Die Verschlußklappe ist bevorzugt relativ zur Ebene ihres Dichtsitzes maximal um 50° schwenkbar. Der Öffnungswinkel der Verschlußklappe wird so gewählt, daß sichergestellt ist, daß keine Flüssigkeit von der Zapfpistole in die Entlüftungsleitung gelangen kann und daß gleichzeitig der Druckvertust der Gasströmung durch das Ventil möglichst gering gehalten wird, wobei sich ein Winkel von 50° für die Gesamtfunktion des Systems als vorteilhaft bewährt hat.

Die dem Kraftstoffbehälter zugewandte Seite der Verschlußklappe ist bevorzugt als Flüssigkeitsabscheider ausgebildet. Durch einen Schwenkwinkel der Verschlußklappe von etwa 45° ist eine ausgezeichnete Abscheidewirkung von flüssigen Kraftstoffbestandteilen, die sich im abströmenden Benzindampf befinden, gewährleistet. Die Abscheidung flüssiger Kraftstoffbestandteile ist sehr wichtig, da alle Flüssigkeitsbestandteile, die in das Absorptionselement in der Speicherkammer gelangen in hohem Maße zur Verminderung seiner Aufnahmefähigkeit für Dämpfe beitragen. Durch die Ausgestaltung der Verschlußklappe als Flüssigkeitsabscheider ist ein separater Flüssigkeitsabscheider entbehrlich. Der beanspruchte Kraftstoffbehälter weist dadurch einen vergleichsweise einfachen Aufbau auf und ist kostengünstig herstellbar.

Der maximale Schwenkwinkel der Verschlußklappe ist bevorzugt erreicht, wenn der Schwenkwinkel der Befüllklappe relativ zur Ebene des Ventilsitzes 45 bis 60° beträgt. Der Schwenkwinkel der Verschlußklappe ist nach Erreichen seines Maximums und weiterer Öffnung der Befüllklappe im wesentlichen konstant.

Durch eine derartige Auslegung der Kurvenbahn der Mitnehmervorrichtung wird im Anschluß an das Abheben der Befüllklappe von ihrem Ventilsitz eine sehr schnelle Öffnung der Verschlußklappe bis zu ihrem maximalen Schwenkwinkel erreicht. Bei weiterem Einführen der Zapfpistole in den Einfüllstutzen und vollständigem Öffnen der Befüllklappe, wobei der Schwenkwinkel der Befüllklappe dann zumindest 90° beträgt, bleibt der Schwenkwinkel der Verschlußklappe im wesentlichen konstant. Hierbei ist von Vorteil, daß der Schwenkwinkel der Verschlußklappe im wesentlichen unabhängig von der Einschubtiefe der Zapfpistole in den Einfüllstutzen ist, da die Verschlußklappe bereits bei nur teilweise geöffneter Befüllklappe ihren maximalen Schwenkwinkel erreicht.

Die Achsen, um die die Klappen schwenkbar sind, sind jeweils radial außerhalb der Ventilsitze angeordnet. Eine derartige Ausgestaltung bewirkt eine einfache Realisierung eines Kurvengetriebes.

Die Federn sind bevorzugt als Haarnadelfedern ausgebildet, wobei die Feder der Verschlußklappe eine größere Rückstellkraft aufweist als die Feder der Befüllklappe. Durch die vergleichsweise stärkere Feder, die auf die Verschlußklappe wirkt, wird der elastomere Dichtring mit vergleichsweise großer Anpreßkraft an den Dichtsitz gepreßt, um außerhalb des Betankungsvorgangs ein sicheres Verschließen des Kraftstoffbehälters in Richtung der Entlüftungsleitung und der anschließenden Speicherkammer sicherzustellen. Demgegenüber kann die Feder der Verschlußklappe vergleichsweise schwächer ausgeführt sein, da ein hermetisches Verschließen des Kraftstoffbehälters gegenüber der Umgebung durch den den Einfüllstutzen abschließenden Tankdeckel gewährleistet ist.

Der Ventilträger, die Klappen, die Achsen und die Federn bilden eine vormontierbare Einheit. Durch die modulare Bauweise besteht die Möglichkeit, vor der Montage des Ventilträgers am Verschlußstutzen die vormontierte Einheit auf einwandfreie Funktion der Einzelteile zu prüfen. Dies ist hinsichtlich einer effizienten Fertigung von hervorzuhebendem Vorteil.

Die Befüllklappe unterliegt einer stärkeren mechanischen Beanspruchung durch die Zapfpistole, mit der sie zum Betanken des Kraftstoffbehälters geöffnet wird. Die Befüllklappe besteht daher bevorzugt aus einem abrasivwiderstandsfähigen polymeren Werkstoff. Durch die zweistückige Ausgestaltung von Verschluß- und Befüllklappe ist eine jeweilige Anpassung des Werkstoffs an die Gegebenheiten des Anwendungsfalls problemlos möglich.

Gelangt eine Zapfpistolendichtung zur Anwendung, ist von Vorteil, daß diese Dichtung beim Einführen der Zapfpistole das Tanksystem gegen die Umgebung abdichtet, bevor die Befüllklappe, die ebenfalls relativ dicht abschließt, aufgestoßen wird. Dadurch ergibt sich eine Verringerung von Emissionen beim Betanken.

Ein Ausführungsbeispiel eines erfindungsgemäßen Kraftstoffbehälters wird nachfolgend anhand der Fig. 1 bis 5 näher erläutert.

### Kurzbeschreibung der Zeichnungen

Diese zeigen:
- In Fig. 1: eine Ausführungsbeispiel eines Ventilträgers, der mit einem Verschlußstutzen verbunden ist,
- in Fig. 2: eine Ansicht des Ventilträgers aus Fig. 1 aus Richtung des Einfüllstutzens,
- in Fig. 3: die Verschluß- und die Befüllklappe als Einzelteile in Geschlossenstellung
- in Fig. 4: die Verschluß- und die Befüllklappe aus Fig. 3, jeweils in Offenstellung und
- in Fig. 5: eine schematische Darstellung des Kraftstoffbehälters und dessen Verbindung zu einer Speicherkammer.

### Ausführung der Erfindung

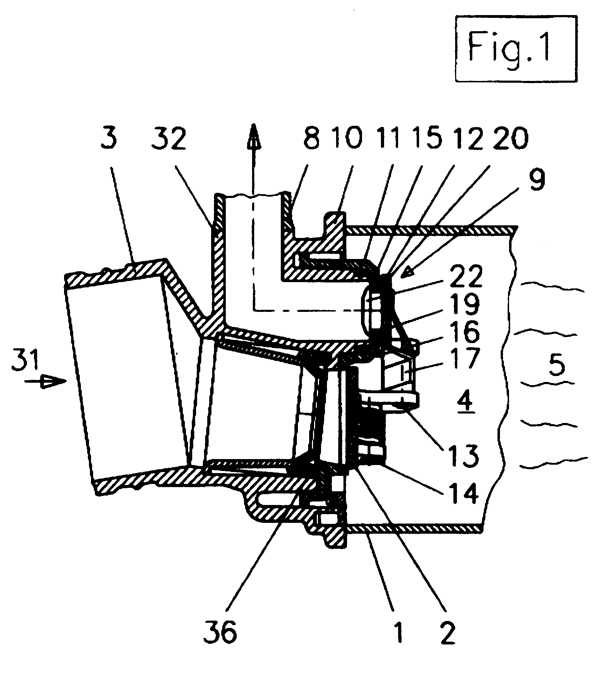

In Fig. 1 ist ein mit einem Verschlußstutzen 10 dichtend verbundener Ventilträger 11 gezeigt. Der Ventilträger 11 besteht, ebenso wie die Verschlußklappe 12 aus Polyoxyethylen, POM, während die Befüllklappe 2 aus relativ verschleißfesterem Polyamid, PA, besteht. Der Verschlußstutzen 10 bildet den stirnseitigen Abschluß des Einfüllstutzens 3 eines Kraftstoffbehälters. Sowohl die Verschlußklappe 12 als auch die Befüllklappe 2 sind im geschlossenen Zustand gezeigt.

Der Verschlußstutzen 10 ist mit einem Anschlußflansch 32 für die Entlüftungsleitung 8 versehen, durch den flüchtige Kraftstoffbestandteile 5 aus dem Freiraum 4 des Kraftstoffbehälters 1 in eine hier nicht dargestellte, mit einem Aktivkohlefilter versehenen Speicherkammer einspeisbar sind. Am Ventilträger 11 sind die Verschluß- 12 und die Befüllklappe 2 jeweils um ihre Achsen 13, 14 schwenkbar und federkraftbeaufschlagt gelagert, wobei die Feder 29 der Verschlußklappe 12 eine größere Rückstellkraft aufweist, als die Feder 30 der Befüllklappe 2. Sowohl der Ventilsitz 15 der Verschlußklappe 12 als auch der Ventilsitz 16 der Befüllklappe 2 bilden einen einstückigen Bestandteil des Ventilträgers 11, wobei nur der Ventilsitz 15 der Verschlußklappe 12 als Dichtsitz 19 ausgebildet ist. Die Verschluß- 12 und die Befüllklappe 2 sind durch eine als Kurvengetriebe ausgebildete Mitnehmervorrichtung 17 mechanisch gekoppelt und beim Einführen einer Zapfpistole 18 durch die Befüllklappe 2 in den Einfüllstutzen 3 gemeinsam in Offenstellung bringbar. Die Verschlußklappe 12 weist einen Haltevorsprung 22 auf, auf den ein aus elastomerem Werkstoff bestehender Dichtring 20 aufschnappbar ist. Der Dichtring 20 ist in Richtung des Dichtsitzes 19 konisch verjüngt. Dadurch wird eine Selbstzentrierung der Verschlußklappe 12 bezogen auf den Dichtsitz 19 erzielt. Der Ventilträger 11, die Klappen 12, 2, die Achsen 15, 16 und die Federn 29, 30 bilden eine vormontierbare Einheit, die vor ihrer Verbindung mit dem Verschlußstutzen 10 auf ihre Funktionsfähigkeit überprüfbar ist.

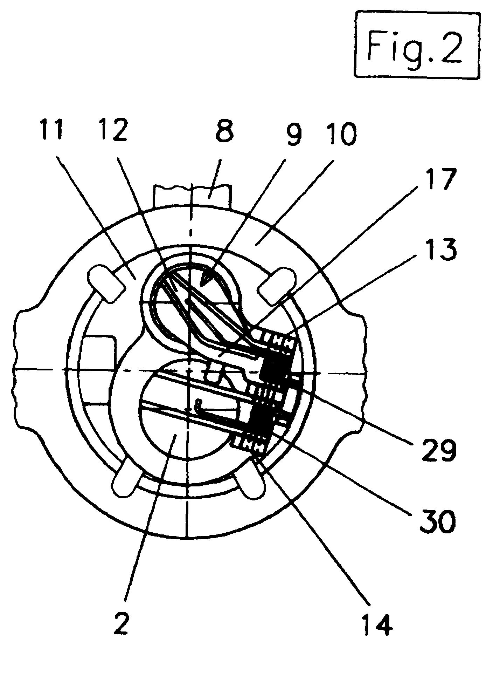

In Fig. 2 ist eine Ansicht des Ventilträgers 11 aus Richtung des Einfüllstutzens 3 gezeigt. Die Befüllklappe 2 und die Verschlußklappe 12 sind jeweils durch eine als Haarnadelfeder ausgebildete Feder 30, 29 an den jeweils unter der Zeichnungsebene liegenden Ventilsitz angedrückt. Um eine zuverlässige Abdichtung der Verschlußklappe 12 wahrend der gesamten Gebrauchsdauer zu erzielen, ist die Feder 29 steifer ausgeführt, als die Feder 30 der Befüllklappe 2.

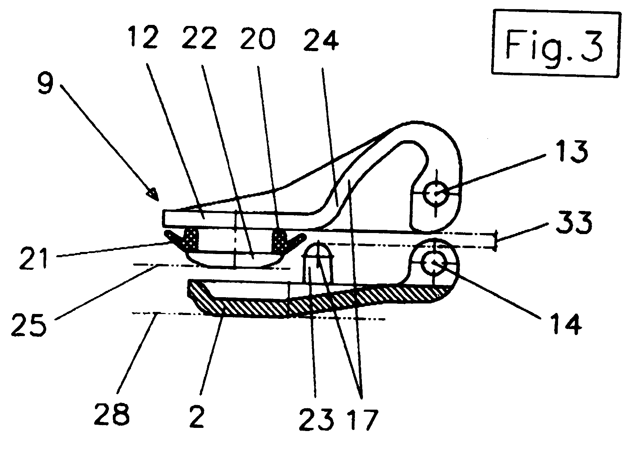

In Fig. 3 ist die relative Zuordnung der Befüllklappe 2 zur Verschlußklappe 12 jeweils im geschlossenen Zustand gezeigt. Die Mitnehmervorrichtung 17 ist als Kurvengetriebe ausgebildet, wobei eine Öffnung der Befüllklappe 2 zwangsweise eine Öffnung der Verschlußklappe 12 bewirkt. Die Befüllklappe 2 ist mit einem einstückig angeformten Führungsnocken 23 versehen, der in der als Kurvenbahn ausgebildeten Führungskulisse 24 der Verschlußklappe 12 verschiebbar geführt ist. Der Leerweg, den die Befüllklappe 2 während ihrer Öffnung überwinden muß, bis der Führungsnocken 23 mit der Führungskulisse 24 in Eingriff bringbar ist, ist in der Zeichnung mit Bezugsziffer 33 versehen. Der Leerweg ist erforderlich, um stets eine zuverlässige Abdichtung der Verschlußklappe 12 gegenüber dem Dichtsitz 19 zu erzielen. Würde der Führungsnocken 23 in Geschlossenstellung der Befüllklappe 2 und der Verschlußklappe 12 bereits an der Führungskulisse 24 anliegen, würden beispielsweise bereits geringe Verunreinigungen in diesem Bereich ausreichen, um die Anpressung des Dichtrings 20 an den Dichtsitz 19 zu verringern, was zu Undichtigkeiten in diesem Bereich und der Möglichkeit führen kann, daß flüssige Kraftstoffbestandteile aus dem Kraftstoffbehälter 1 durch das Ventil 9 und die Entlüftungsleitung 8 in das Absorptionselement 6 der Speicherkammer 7 gelangen und dessen Aufnahmefähigkeit für flüchtige Kraftstoffbestandteile nachteilig beeinflußt.

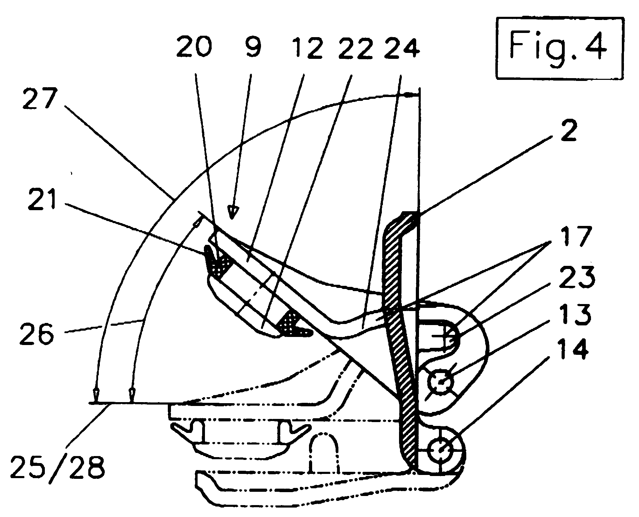

In Fig. 4 sind die Befüllklappe 2 und die Verschlußklappe 12 in Offenstellung gezeigt. Der maximale Schwenkwinkel der Verschlußklappe 12 beträgt in diesem Ausführungsbeispiel bezogen auf die Ebene 25 des Dichtsitzes 19 40°. Dieser maximale Schwenkwinkel wird bereits dann erreicht, wenn der Schwenkwinkel 27 der Befüllklappe 2 relativ zur Ebene 28 des Ventilsitzes in diesem Ausführungsbeispiel 50° beträgt. Der Schwenkwinkel der Verschlußklappe 12 ändert sich bei einer Vergrößerung des Schwenkwinkels 27 von 50° auf die in dieser Fig. dargestellten 90° nicht mehr.

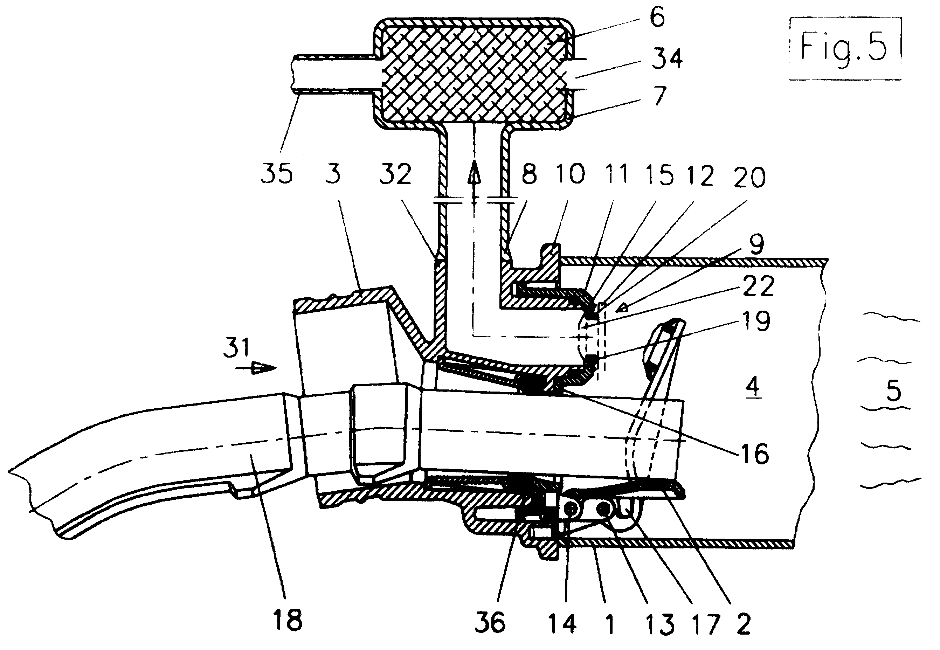

In Fig. 5 ist die Betankung des erfindungsgemäßen Kraftstoffbehälters 1 schematisch dargestellt. Für eine Betankung des Kraftstoffbehälters 1 wird zunächst ein hier nicht dargestellter Tankdeckel vom Verschlußstutzen 10 entfernt, der ein Über- und Unterdruckventil aufweist und den Kraftstoffbehälter während des Betriebs der angeschlossenen Verbrennungskraftmaschine hermetisch verschließt. Anschließend wird die Zapfpistole 18 in den Verschlußstutzen 10 eingeführt, wobei die Befüllklappe 2 durch das Einführen der Zapfpistole 18 in den Einfüllstutzen 3 in Offenstellung überfuhrt wird. Bereits dann, wenn die Befüllklappe 2, bezogen auf ihren Ventilsitz 16, einen Schwenkwinkel von 50° einschließt, ist die Verschlußklappe 12 voll geöffnet und weist, bezogen auf ihre Geschlossenstellung, einen Schwenkwinkel von 40° auf. Ist die Zapfpistole 18 - wie hier dargestellt - soweit wie möglich in den Einfüllstutzen 3 eingeführt, ist die Befüllklappe 2 um 90° - bezogen auf ihre Geschlossenstellung - geschwenkt. Die im Freiraum 4 der Tankanlage befindlichen flüchtigen Kraftstoffbestandteile 5 gelangen an der Verschlußklappe 12 und dem Dichtsitz 19 vorbei durch den Anschlußflansch 32 in die Entlüftungsleitung 8 und von der Entlüftungsleitung 8 in die schematisch gezeigte Speicherkammer 7, die mit einem als Aktivkohlefilter ausgebildeten Absorptionselement 6 gefüllt ist. Zur Regeneration des Absorptionselements 6 ist die Speicherkammer mit einer Belüftungsleitung 34 versehen und weist zur Einspeisung der flüchtigen Kraftstoffbestandteile eine Leitung 35 auf, die in das Ansaugrohr einer hier nicht dargestellten Verbrennungskraftmaschine mündet. Die Zapfpistole 18 ist umfangsseitig durch eine im Verschlußstutzen 10 angeordnete Dichtung 36 aus elastomerem Werkstoff während des Betankens zur Umgebung hin abgedichtet.

## Patentansprüche

1. Kraftstoffbehälter mit einem durch eine Befüllklappe verschließbaren Einfüllstutzen, wobei die im Freiraum des Kraftstoffbehälters befindlichen flüchtigen Kraftstoffbestandteile in eine mit einem Absorptionselement gefüllte Speicherkammer einspeisbar sind, umfassend eine den Freiraum mit der Speicherkammer verbindende Entlüftungsleitung, die durch ein Ventil verschließbar ist, **dadurch gekennzeichnet,** daß der Einfüllstutzen (3) auf der dem Kraftstoffbehälter (1) abgewandten Seite einen Verschlußstutzen (10) mit einem Ventilträger (11) aufweist, daß das Ventil (9) eine Verschlußklappe (12) umfaßt, daß die Verschluß- (12) und die Befüllklappe (2) Bestandteile des Ventilträgers (11) bilden, jeweils um eine Achse (13, 14) schwenkbar und federkraftbeaufschlagt an jeweils einem Ventilsitz (15, 16) im Ventilträger (11) anlegbar sind und daß die Verschluß- (12) und die Befüllklappe (2) durch eine Mitnehmervorrichtung (17) mechanisch gekoppelt und durch Einführen einer Zapfpistole (18) durch die Befüllklappe (2) in den Einfüllstutzen (3) gemeinsam in Offenstellung bringbar sind.

2. Kraftstoffbehälter nach Anspruch 1, dadurch gekennzeichnet, daß der Ventilsitz (15) der Verschlußklappe (12) als Dichtsitz (19) ausgebildet ist, daß die Verschlußklappe (12) auf der dem Dichtsitz (19) zugewandten Seite einen Dichtring (20) aus elastomerem Werkstoff aufweist und dichtend an den Dichtsitz (19) anlegbar ist.

3. Kraftstoffbehälter nach Anspruch 2, dadurch gekennzeichnet, daß der Dichtring (20) eine sich konisch in Richtung des Dichtsitzes (19) verjüngende Dichtfläche (21) aufweist und auf einen einstückig mit der Verschlußklappe (12) ausgebildeten Haltevorsprung (22) aufschnappbar ist.

4. Kraftstoffbehälter nach einem der Ansprüche 1 bis 3, dadurch gekennzeichnet, daß die Mitnehmervorrichtung (17) durch ein Kurvengetriebe gebildet ist und daß die Verschlußklappe (12) bei Öffnung der Befüllklappe (2) zwangsweise in Offenstellung bringbar ist.

5. Kraftstoffbehälter nach einem der Ansprüche 1 bis 4, dadurch gekennzeichnet, daß die Befüllklappe (2) mit einem Führungsnocken (23) versehen ist, der in einer Führungskulisse (24) der Verschlußklappe (12) verschiebbar geführt ist.

6. Kraftstoffbehälter nach einem der Ansprüche 1 bis 5, dadurch gekennzeichnet, daß die Verschlußklappe (12) relativ verzögert zur Befüllklappe (2) in Offenstellung bringbar ist.

7. Kraftstoffbehälter nach einem der Ansprüche 1 bis 6, dadurch gekennzeichnet, daß die Verschlußklappe (12) relativ zur Ebene (25) des Dichtsitzes (19) maximal um 50° schwenkbar ist.

8. Kraftstoffbehälter nach einem der Ansprüche 1 bis 7, dadurch gekennzeichnet, daß die dem Kraftstoffbehälter (1) zugewandte Seite der Verschlußklappe (12) als Flüssigkeitsabscheider ausgebildet ist.

9. Kraftstoffbehälter nach einem der Ansprüche 1 bis 8, dadurch gekennzeichnet, daß der maximale Schwenkwinkel (26) der Verschlußkappe (12) erreicht ist, wenn der Schwenkwinkel (27) der Befüllklappe (2) relativ zur Ebene (28) der Ventilsitzes (16) 45 bis 60° beträgt.

10. Kraftstoffbehälter nach einem der Ansprüche 1 bis 9, dadurch gekennzeichnet, daß der Schwenkwinkel (26) der Verschlußklappe (12) nach Erreichen seines Maximums und weitere Öffnung der Befüllklappe (2) im wesentlichen konstant ist.

11. Kraftstoffbehälter nach einem der Ansprüche 1 bis 10, dadurch gekennzeichnet, daß die Achsen (13, 14) jeweils radial außerhalb der Ventilsitze (15, 16) angeordnet sind.

12. Kraftstoffbehälter nach einem der Ansprüche 1 bis 11, dadurch gekennzeichnet, daß die Federn (29, 30) jeweils als Haarnadelfedern ausgebildet sind und daß die Feder (29) der Verschlußklappe (12) eine größere Rückstellkraft aufweist als die Feder (30) der Befüllklappe (2).

13. Kraftstoffbehälter nach einem der Ansprüche 1 bis 12, dadurch gekennzeichnet, daß der Ventilträger (11), die Klappen (12, 2), die Achsen (15, 16) und die Federn (29, 30) eine vormontierbare Einheit bilden.

14. Kraftstoffbehälter nach einem der Ansprüche 1 bis 13, dadurch gekennzeichnet, daß der Verschlußstutzen (10) und der Ventilträger (11) jeweils aus einem polymeren Werkstoff bestehen.
